# EUROPÄISCHE PATENTSCHRIFT

(11) **EP 1 008 498 B1**
(45) Veröffentlichungstag und Bekanntmachung des Hinweises auf die Patenterteilung: **04.05.2005**
(21) Anmeldenummer: 99123921.1
(22) Anmeldetag: 02.12.1999
(51) Int. Cl.: B60R 22/34, B60R 22/28

(54) **Gurtaufroller für einen Fahrzeugsicherheitsgurt und Verfahren zum Betätigen eines Gurtaufrollers**
Belt retractor for a vehicle seat belt and process for actuating a belt retractor
Rétracteur pour une ceinture de sécurité de véhicule et procédé d'actionnement d'un rétracteur

(30) Priorität: 07.12.1998 DE 19856364
(43) Veröffentlichungstag der Anmeldung: 14.06.2000
(73) Patentinhaber: TRW Automotive GmbH, 73553 Alfdorf (DE)
(72) Erfinder: Böhmler, Klaus, 73525 Schwäbisch Gmünd (DE)
(74) Vertreter: Kitzhofer, Thomas, Dipl.-Ing.

(56) Entgegenhaltungen:
- DE-A- 19 650 494
- DE-A- 19 727 919
- DE-C- 19 604 483
- DE-U- 29 708 493

## Beschreibung

Die Erfindung betrifft einen Gurtaufroller für einen Fahrzeugsicherheitsgurt, gemäß dem Oberbegriff des Anspruchs 1.

Kraftbegrenzer (z.B. Torsionsstäbe, Bandauszugsvorrichtungen oder deformierbare Gewinde) sollen bei dem Unfall die auf den Insassen über den Sicherheitsgurt ausgeübte Rückhaltekraft begrenzen. Jedoch ist die Begrenzung der Kraft auch in bestimmten Situationen nachteilig. Beispielsweise können extrem schwere Insassen durch den für sie zu schwach ausgelegten Kraftbegrenzer eine zu geringe Rückhaltekraft erfahren. Darüber hinaus sind die Kraftbegrenzer meist auf den zusätzlich im Fahrzeug vorhandenen Gassack abgestimmt, d.h. nur zusammen entfalten beide Sicherheitssysteme die optimale Rückhaltewirkung. Ist der Gassack deaktiviert, so kann die Rückhaltewirkung des Sicherheitsgurtes zu gering sein. Dieses Deaktivieren des Gassacks ist zum Beispiel in USA auf Antrag hin möglich. Darüber hinaus ist ein Gassack natürlich auch nach einer Auslösung deaktiviert. Nach einem sogenannten Primäraufprall steht er damit nicht mehr zur Unterstützung des Sicherheitsgurtsystems zur Verfügung. Darüber hinaus ist der Kraftbegrenzer nach einem Primäraufprall, da Kraftbegrenzer üblicherweise aus plastisch deformierbaren Elementen bestehen, zum Teil zerstört. Für eine zweite Rückhaltung nach dem Primäraufprall steht damit eine geringere Rückhaltewirkung zur Verfügung, obwohl eine höhere Rückhaltewirkung vorhanden sein sollte, denn der Gassack ist außer Funktion.

In der gattungsgemäßen DE-C 196 04 483 ist ein Gurtaufroller beschrieben, der mehrere Optionen zur Blockierung seiner Gurtspule bietet. Es sind zwei gleichzeitig wirkende Kraftbegrenzer sowie die Möglichkeit vorgesehen, die Kraftbegrenzer zu überbrücken und die Gurtspule lastunabhängig zu sperren. Jede der Kraftbegrenzungs- bzw. Sperrfunktionen wird durch einen eigenen Einsteuermechanismus angesprochen.

Die DE-A 197 27 919 zeigt einen Gurtaufroller mit einem als Torsionsstab ausgebildeten Kraftbegrenzer, der bei einem Unfall überbrückt werden kann, um die Gurtspule lastunabhängig zu sperren.

Die Erfindung schafft einen Gurtaufroller, der die obengenannten Nachteile beseitigt. Dies wird durch einen Gurtaufroller nach Anspruch 1 erreicht. Nach einem Primäraufprall wird das Stellelement betätigt, um einen noch nicht benutzten Kraftbegrenzer zuzuschalten oder den oder die Kraftbegrenzer zu deaktivieren. Da nach einem Primäraufprall der im Kraftflußweg liegende Kraftbegrenzer üblicherweise plastisch deformiert wurde, steht für einen Sekundäraufprall wieder ein wirksamer Rückhalteschutz zur Verfügung. Der zweite Kraftbegrenzer wird nach einem Primäraufprall bezüglich des Kraftflußweges gemäß einer Schaltvariante überbrückt, und ein unmittelbares Sperren der Gurtspule, ohne den Umweg über den Kraftbegrenzer, wird erreicht. Dies bietet eine gute Rückhaltewirkung sowohl bei einer sekundären Vorverlagerung des Insassen als auch bei einem Folgeaufprall (Massenkarambolage oder zweiter Unfall nach Primäraufprall). Der Kraftbegrenzer muß, obwohl er überbrückt wird, nicht vollständig aus dem Kraftflußweg ausgeschlossen sein. Vielmehr ist es auch möglich, daß in der Blockierstellung zwei Kraftflußwege, ein direkter, von der Gurtspule zu einem Sperrglied ohne Zwischenschaltung eines Kraftbegrenzers und ein indirekter über den Kraftbegrenzer vorhanden sind. Der auch im folgenden öfter verwendete Begriff "wenigstens in Richtung zu einer Blockierstellung" oder auch "wenigstens in Richtung zu einer anderen Stellung" bedeutet, daß das Stellelement den Blockiermechanismus soweit betätigt, daß er gurtbandsensitiv oder fahrzeugsensitiv im Rückhaltefall in die Blockierstellung gebracht wird. Dieser technische Ausdruck soll jedoch auch umfassen, daß das Stellelement den Blockiermechanismus direkt in die Blockierstellung bringt, was auch ein Schalten unter Last sein kann, wenn nämlich z.B. nach einem Primäraufprall, nachdem ein Kraftbegrenzer gewirkt hat, der Blockiermechanismus sofort zum vollständigen Verriegeln der Gurtspule in die Blockierstellung verschoben wird. Der Blockiermechanismus hat also eine weitere Stellung, in der er einen Kraftbegrenzer zuschaltet. Das bedeutet, daß wenigstens drei verschiedene Rückhaltekräfte erreicht werden können. Die höchste Rückhaltekraft wird in der Blockierstellung zur Verfügung gestellt, eine weitere Rückhaltekraft bei Zuschaltung des Kraftbegrenzers, der in der weiteren Stellung aktiv wird, und schließlich eine dritte Rückhaltekraft, wenn der Blockiermechanismus weder in der Blockierstellung noch in der weiteren Stellung (also z.B. in der Freigabestellung) ist, so daß hier nur der deaktivierbare Kraftbegrenzer wirkt.

Bevorzugt hat der Blockiermechanismus darüber hinaus eine Freigabestellung, in der er die Gurtspulendrehung nicht beeinflußt. In dieser Stellung wirkt somit der Kraftbegrenzer. Wenn mehrere Kraftbegrenzer vorgesehen sind, können in der Freigabestellung z.B. alle Kraftbegrenzer zugeschaltet sein.

Die Stellung des Blockiermechanismus hängt von wenigstens einem der folgenden Faktoren ab:
Gewicht des Insassen,
Größe des Insassen,
Unfallschwere oder
Position des Insassen im Fahrzeug.

Der letztgenannte Punkt soll die Situation beherrschbar machen, wenn der Insasse nicht mittig und zurückgelehnt im Fahrzeug sitzt, sondern sich aus dieser Idealposition vor dem Unfall bewegt hat.

Das Stellelement kann eine Stellschraube sein. Dies hat den Zweck, den Kraftbegrenzer z.B. bei deaktiviertem Gassack ebenfalls zu deaktiveren, damit er eine höhere Rückhaltekraft bereitstellen kann. Auch wenn z.B. stets eine sehr schwere Person das Fahrzeug benutzt, kann der Kraftbegrenzer deaktiviert werden.

Das Stellelement kann auch ein elektrisches Stellelement, wie z.B. ein Schalter sein.

Darüber hinaus ist es auch möglich, eine automatische Verstellung des Stellelements auf rein mechanischem Wege zu erreichen. Hier ist das Stellelement mit der Gurtspule mechanisch gekoppelt. Im Rückhaltefall, wenn Gurtband unter Last abgezogen wird, führt die Gurtspulendrehung zu einer solchen Verstellung des Stellelements, daß der Blockiermechanismus in Richtung Blockierstellung gelangt. Dies kann beispielsweise dadurch erreicht werden, daß das Stellelement eine Kupplungsscheibe ist, die bei Beschleunigung im Rückhaltefall eine Steuerklinke als Blockiermechanismus in Richtung Blockierstellung verschiebt. Darüber hinaus ist es auch möglich, im Rückhaltefall die Gurtspule mit einer Mutter/Spindelanordnung zu koppeln, wodurch die Spindel in Drehung versetzt und die nicht mitdrehende Mutter axial verlagert wird. Die Mutter kann dann als Stellelement dienen. Eine weitere Möglichkeit der mechanischen Kopplung besteht z.B. im Vorsehen einer schiefen Ebene oder einer Kulisse, die im Rückhaltefall in Drehung versetzt werden, um eine Verstellbewegung abzuleiten.

Ferner kann das Stellelement auch als pyrotechnischer Stellantrieb ausgebildet sein. Der Blockiermechanismus umfaßt vorzugsweise ein Sperrglied in Form einer verschiebbaren Sperrklinke. Die Sperrklinke rastet in der Blockierstellung in eine der Gurtspule zugeordnete Sperrverzahnung, im folgenden Gurtspulensperrverzahnung genannt, ein. Den Kraftbegrenzern ist jeweils eine eigene Sperrverzahnung zugeordnet. Die verschiebbare Sperrklinke rastet in einer weiteren Stellung in eine Sperrverzahnung eines weiteren Kraftbegrenzers ein. Damit wird dieser Kraftbegrenzer zugeschaltet, z.B. wenn ein schwerer Insasse vorhanden ist oder ein schwerer Unfall vorliegt.

Als Kraftbegrenzer kommen z.B. eine Bandauszugsvorrichtung oder ein Torsionsstab in Frage. Jedem Kraftbegrenzer kann eine eigene Sperrverzahnung zugeordnet sein und eine eigene Sperrklinke oder die verschiebbare Sperrklinke.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Längsschnitt durch einen Gurtaufroller nach der Erfindung gemäß einer ersten Ausführungsform, mit einem manuell betätigbaren Stellelement und mit elektrischem Stellelement, und
- Figur 2 einen Längsschnitt durch einen Gurtaufroller gemäß einer zweiten Ausführungsform, mit pyrotechnischem Stellantrieb.

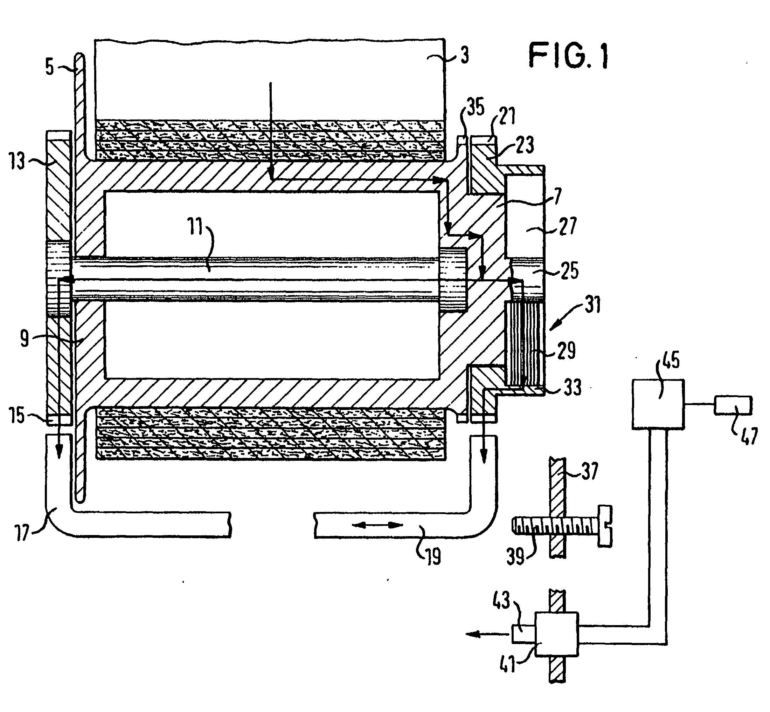

In Figur 1 ist ein Gurtaufroller für einen Fahrzeugsicherheitsgurt 3 dargestellt. Der Sicherheitsgurt ist auf eine Gurtspule 5 aufgewickelt. Die Gurtspule 5 hat zwei Stirnwände, nämlich eine rechte Stirnwand 7 und eine linke Stirnwand 9. Durch das Innere der Gurtspule 5 erstreckt sich ein Torsionsstab 11, der drehfest mit der rechten Stirnwand 7 verbunden ist. Der Torsionsstab 11 erstreckt sich durch eine Öffnung in der linken Stirnwand 9 hindurch nach außen und ist mit einem Sperrad 13 verbunden, das an seinem Außenumfang eine Sperrverzahnung 15 aufweist. In die Sperrverzahnung 15 kann bei abruptem Gurtbandabzug im Rückhaltefall ein Sperrglied in Form einer verschwenkbaren Sperrklinke 17 einsteuern, so daß das Sperrad 13 an einer Drehung gehindert wird. Mechanismen zur Betätigung der Sperrklinke 17 sind bekannt und werden bereits in früheren Anmeldungen beschrieben, so daß nicht näher hierauf eingegangen werden muß. Üblicherweise sind Sperrklinken U-förmig gebogene Blechteile, die an ihren freien Schenkelenden Sperrzähne haben. Die Sperrklinke 17 kann man sich als eine Hälfte eines solchen U-förmig gebogenen Teiles vorstellen. Darüber hinaus weist der Gurtaufroller noch eine weitere Sperrklinke, sozusagen die rechte Hälfte einer U-förmig gebogenen herkömmlichen Sperrklinke auf. Diese rechte Sperrklinke ist mit 19 bezeichnet.

Während die linke Sperrklinke nur verschwenkbar ist, ist die rechte Sperrklinke 19 verschwenkbar und zudem in Pfeilrichtung verschiebbar. Auch die Sperrklinke 19 stellt ein Sperrglied dar. Ihre Sperrzähne können mit einer Sperrverzahnung 21 an der Außenseite eines Gehäuses 23 einrasten, wenn die Sperrklinke 19 in der in Figur 1 dargestellten Stellung ist. Das Gehäuse 23 umgibt die rechte Stirnwand 7. Zwischen einem zapfenförmigen Ausläufer der Stirnwand 7, welcher mit 25 bezeichnet ist, und dem Gehäuse 23 ist ein Raum 27, in dem ein Metallband 29 als Teil einer Bandauszugsvorrichtung 31 in einem Kanal untergebracht ist. Diese Bandauszugsvorrichtung 31 bildet neben dem Torsionsstab 11 einen zweiten Kraftbegrenzer im Gurtaufroller. Die Bandauszugsvorrichtung hat eine sogenannte Schikane 33. Im Rückhaltefall wird das Metallband 29 durch die Schikane 33 aufgrund des Gurtbandabzugs unter Last gezogen und deformiert. Die hierzu notwendige Kraft wird dem Drehen der Gurtspule unter Last, d.h. im Rückhaltefall, entgegengesetzt.

Die Sperrklinke 19 ist nach links verschiebbar und kann zu einer Gurtspulensperrverzahnung 35 verschoben werden. Die Gurtspulensperrverzahnung 35 ist dadurch gekennzeichnet, daß zwischen ihr und der Gurtspule 5 kein Kraftbegrenzer zwischengeschaltet ist. Die Sperrklinke 19 bildet einen Blockiermechanismus.

In einem die Gurtspule umgebenden Gehäuse 37, das nur durch einen Abschnitt dargestellt ist, ist eine Stellschraube 39 vorgesehen, die als Stellelement dient. Die Stellschraube 39 kann so weit in die ihr zugeordnete Gewindeöffnung im Gehäuse 37 eingedreht werden, daß ihre Spitze an die Sperrklinke 19 stößt. Über die Schraube, die auch in beiden axialen Richtungen mit der Sperrklinke 19 gekoppelt sein kann, kann die Sperrklinke 19 nach links verschoben werden und unterhalb der Spulensperrverzahnung 35 zu liegen kommen, und, beim Schwenken, in diese Verzahnung 35 einrasten. Wenn die Sperrklinke 19 in die Spulensperrverzahnung 35 eingerastet ist, ist der Blockiermechanismus in der Blockierstellung. Wenn hingegen die Sperrklinke 19 in der in Figur 1 gezeigten Stellung ist und zudem auch noch mit der Sperrverzahnung 21 in Eingriff kommt, ist eine sogenannte weitere Stellung des Blockiermechanismus erreicht. Wie erwähnt, ist es auch denkbar, die Sperrklinke 19 von der weiteren Stellung direkt in die Blockierstellung zu verschieben, was aber eine darauf abgestimmte Auslegung des Stellelements und der Verzahnung erfordert.

Im normalen Fahrbetrieb kann der Sicherheitsgurt 3 von der Gurtspule 5 abgewickelt und wieder von ihr aufgerollt werden. Hier funktioniert der erfindungsgemäße Gurtaufroller wie die bekannten Gurtaufroller. Im Rückhaltefall, z.B. bei plötzlichem Gurtbandabzug, kommen die beiden nicht miteinander gekoppelten Sperrklinken 17 und 19 in Eingriff mit ihren zugeordneten Sperrverzahnungen. Wenn die Sperrklinke 17 mit der Sperrverzahnung 15 in Eingriff kommt, wird der Torsionsstab 11 an seinem linken Ende an einer Drehung gehindert. Es wird jedoch im Rückhaltefall Kraft auf den Sicherheitsgurt 3 durch den sich nach vorne verlagernden Insassen ausgeübt, so daß die Gurtspule 5 den Torsionsstab zwischen seinen beiden axialen Enden tordiert und ggf. sogar plastisch deformiert.

Wenn die Sperrklinke 19 in der in Figur 1 gezeigten Stellung ist und mit der Sperrverzahnung 21 ebenfalls im Rückhaltefall gekoppelt wird (weitere Stellung), wird auch die Bandauszugsvorrichtung 31 aktiviert. Dadurch wird über die sich drehende rechte Stirnwand oder eine mit ihr gekoppelte andere Scheibe das Metallband 29 durch die Schikane 33 gezogen. Auch hierdurch wird der Drehung der Gurtspule 5 ein Widerstand entgegengesetzt. Somit sind beide Kraftbegrenzer aktiv. Der Verlauf der Kraft ist durch die Pfeile dargestellt. Beide Kraftbegrenzer sind parallel geschaltet. Wird der Sicherheitsgurt stets von einem extrem schweren Insassen benutzt oder wird der zugeordnete Gassack auf Wunsch des Fahrzeugbesitzers deaktiviert, so wird die Stellschraube 39 von einer Bedienperson in einem Fachbetrieb betätigt und die Sperrklinke 19 nach links verschoben. Im Rückhaltefall blockiert sie über die Gurtspulensperrverzahnung 35 die Gurtspule 5. Das bedeutet, daß kein Kraftbegrenzer mehr wirkt, der einer Verdrehung der Gurtspule 5 unter Last nur eine begrenzte Kraft entgegensetzt und eine Verdrehung der Gurtspule im begrenzten Maße erlaubt. Die Rückhaltekraft ist damit größer. Auch in diesem Fall rastet die Sperrklinke 17 in die Sperrverzahnung 15 ein, obwohl der Torsionsstab 19 deaktiviert bzw. überbrückt ist, indem ein direkter Kraftfluß von der Gurtspule in die Sperrklinke 19 ohne Zwischenschaltung eines Kraftbegrenzers vorgesehen ist. Es ist jedoch vorteilhaft, daß auch die Sperrklinke 17 in diesem Fall in die Sperrverzahnung 15 einrastet, damit die Gurtspule 5 nicht einseitig nur an ihrem rechten axialen Ende abgestützt wird. Somit dient die Sperrklinke 17, obwohl über sie so gut wie keine Kraft mehr fließt, der Stabilisierung der Gurtspule 5 im Rückhaltefall. Es kann natürlich eine gewisse, geringfügige Kraft über den Torsionsstab 11 auch noch zur Sperrklinke 17 geleitet werden. Im Sinne der Erfindung bedeutet dies aber, daß dennoch der Torsionsstab 11 als Kraftbegrenzer deaktiviert ist, denn es ist ein direkter Kraftfluß von der Gurtspule 5 zur Sperrklinke 19 ohne Zwischenschaltung eines Kraftbegrenzers vorhanden.

Anstatt einer Stellschraube 39 kann auch ein elektrisches Stellelement 41 vorgesehen sein, wie es in Figur 1 dargestellt ist. Das elektrische Sperrelement 41 hat eine Art Schaltstößel 43, der an der Sperrklinke 19 angreifen kann oder sogar mit ihr verbunden ist. Das elektrische Stellelement 41 ist mit einer Steuerung 45 gekoppelt, die z.B. die Gassacksteuerung sein kann. Diese Steuerung 45 ist mit mehreren Sensoren 47, von denen nur einer gezeigt ist, verbunden. Diese Anordnung gibt zahlreiche Möglichkeiten zur Betätigung des Gurtaufrollers. Wenn der Gassack, genauer gesagt die Gassack-Rückhaltevorrichtung, deaktiviert wird, gibt die Steuerung 45 entsprechende Signale an das Stellelement 41. Dieses verschiebt dann die Sperrklinke 19 nach links. Darüber hinaus können z.B. die Sensoren als das Gewicht des Insassen, die Größe des Insassen, die Unfallschwere oder die Position des Insassen im Fahrzeug bestimmende Sensoren sein. Ist der Insasse z.B. besonders schwer, wird automatisch die Sperrklinke 19 nach links geschoben, ist der Insasse leicht oder hat er durchschnittliches Gewicht, beläßt das Stellelement 41 die Sperrklinke 19 in der in Figur 1 gezeigten Stellung oder schiebt sie in diese zurück. Auch bei Unfällen von extremer Schwere, die von einem sogenannten Crash-Sensor ermittelt wird, kann es dazu kommen, daß das Stellelement 41 die Sperrklinke 19 nach links schiebt und somit die Blockierstellung erlaubt.

Aber die gezeigte Anordnung vermag noch mehr. Beispielsweise kann das Stellelement bringt die Sperrklinke 19 nach einem Primäraufprall, bei dem der Torsionsstab 11 gewirkt hat, in Richtung zur oder sogar unmittelbar in die Blockierstellung oder schaltet einen noch nicht benutzten Kraftbegrenzer zu und öffnet einen anderen Kraftflußweg, so daß für einen Sekundäraufprall oder bei einem weiteren Aufprall auf der Fahrt, z.B. zu einer Werkstatt, noch genügend Rückhaltekraft vorhanden wäre.

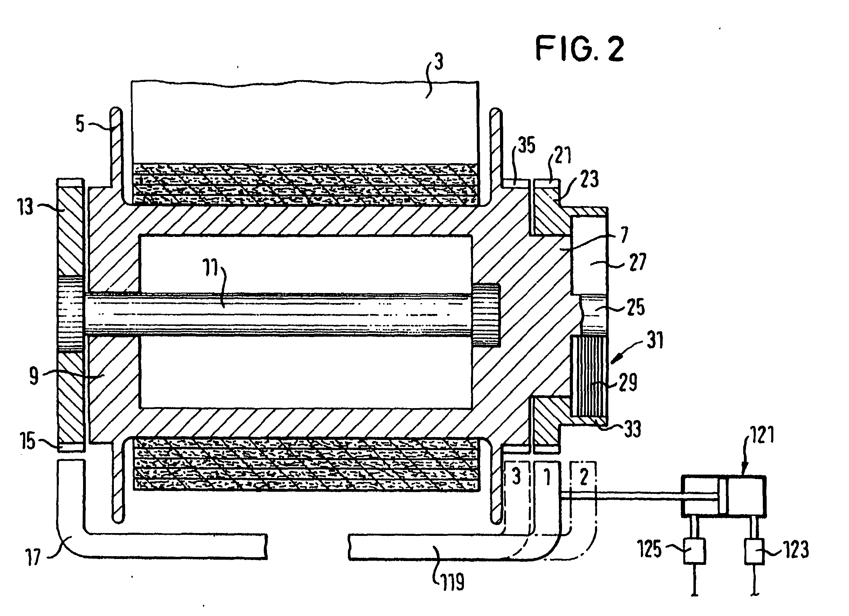

Die in Figur 2 gezeigte Ausführungsform entspricht in den meisten Teilen der in Figur 1 dargestellten Ausführungsform, so daß die bereits erwähnten und sich entsprechenden Teile auch die bereits eingeführten Bezugszahlen tragen und auf diese nicht mehr näher eingegangen werden muß. Der Gurtaufroller unterscheidet sich von dem in Figur 1 gezeigten aber im Blockiermechanismus. Die Sperrklinke 119 kann parallel zum Torsionsstab 11, d.h. in axialer Richtung, in drei Stellungen verschoben werden. Zum Verschieben ist ein pyrotechnischer Stellantrieb 121 in Form eines doppelt wirkenden Zylinders vorgesehen, dessen Arbeitsräume einen eigenen Gasgenerator 123, 125 haben. Jeder Gasgenerator 123, 125 ist mit einer Steuerungseinheit verbunden, die der in Figur 1 mit 45 bezeichneten entspricht. Die drei verschiedenen Stellungen der Sperrklinke 119 sind:

Die mit 1 bezeichnete und in Verbindung mit Figur 1 beschriebene Stellung, aus der die Sperrklinke 119 in die Sperrverzahnung 21 und damit die weitere Stellung verschwenken kann.

Die mit 2 bezeichnete, sogenannte Freigabestellung, in welcher die Sperrklinke auch bei einem Unfall in keine Sperrverzahnung eingreifen kann.

Die mit 3 bezeichnete Stellung, aus der die Sperrklinke 119 in die Gurtspulensperrverzahnung 35 und so die Blockierstellung schwenken kann.

Wenn z.B. die Stellung 1 den normalen Fahrbetrieb kennzeichnet, kann die Sperrklinke 119 durch das pyrotechnische Stellelement 121 sowohl nach rechts wie auch nach links verschoben werden. Ist z.B. eine besonders leichte Person zurückzuhalten, kann es erforderlich sein, die Sperrklinke in die Stellung 2, die Freigabestellung, zu bewegen. Darüber hinaus ist es auch denkbar, daß nach einem Primäraufprall die Sperrklinke 119 in die Stellung 3 verschoben wird, wo sie sämtliche Kraftbegrenzer deaktiviert. Als Ausgangsstellung kann aber auch die Freigabestellung 2 dienen. Dann muß lediglich der pyrotechnische Stellantrieb 121 anders ausgeführt sein, nämlich als Zylinder, der zwei verschiedene Hubwege in einer Richtung aufweist. In diesem Fall kann, je nach Bedingungen, die Sperrklinke in die Stellung 1 oder 3 verschoben werden.

Nach einem Primäraufprall können die Kraftbegrenzer (Torsionsstab und Bandauszugsvorrichtung) deaktiviert werden, um zu einer höheren Rückhaltekraft zu kommen. Der zuvor beschriebene Gurtaufroller muß jedoch, wie auch beschrieben, nicht zwingend so betätigt werden, sondern bietet auch andere Möglichkeiten, unterschiedliche Rückhaltekräfte zu erzielen.

## Patentansprüche

1. Gurtaufroller für einen Fahrzeugsicherheitsgurt (3),
mit einer Gurtspule (5),
einem ersten (11) und einem zweiten Kraftbegrenzer (31), die jeweils dem Drehen der Gurtspule (5) beim Abwickeln eine definierte Kraft entgegensetzen, und
einem ersten Sperrglied (17), das im Rückhaltefall den ersten Kraftbegrenzer (31) in den Kraftfluß zwischen dem ersten Sperrglied (17) und der Gurtspule (5) bringt,
sowie einem Stellelement (39; 41; 121) und einem Blockiermechanismus (19, 35,119), der als zweites Sperrglied (19,119) ausgebildet ist,
**dadurch gekennzeichnet, daß**
nach einem Primäraufprall, bei dem der erste Kraftbegrenzer (11) betätigt wurde, durch das Stellelement (39; 41; 121) wahlweise
das zweite Sperrglied (19,119) wenigstens in Richtung zu einer ersten Blockierstellung, in der der erste (11) und der zweite Kraftbegrenzer (31) deaktiviert sind, bewegt wird oder
ein noch unbenutzter Kraftbegrenzer (31) zugeschaltet wird.

2. Gurtaufroller nach Anspruch 1, **dadurch gekennzeichnet, daß** der Blockiermechanismus eine Freigabestellung hat, in der er die Gurtspulendrehung nicht beeinflußt.

3. Gurtaufroller nach einem der vorhergehenden Ansprüche, **dadurch gekennzeichnet, daß** die Stellung des Blockiermechanismus während eines Unfalls von wenigstens einem der folgenden Faktoren abhängt:
Gewicht des Insassen,
Größe des Insassen,
Unfallschwere oder
Position des Insassen im Fahrzeug.

4. Gurtaufroller nach einem der vorhergehenden Ansprüche, **dadurch gekennzeichnet, daß** mehrere Kraftbegrenzer vorgesehen und sämtliche Kraftbegrenzer in der ersten Blockierstellung deaktiviert sind.

5. Gurtaufroller nach einem der vorhergehenden Ansprüche, **dadurch gekennzeichnet, daß** das Stellelement eine Stellschraube (39) ist.

6. Gurtaufroller nach einem der Ansprüche 1 bis 4, **dadurch gekennzeichnet, daß** das Stellelement ein elektrisches Stellelement (41) ist.

7. Gurtaufroller nach Anspruch 6, **dadurch gekennzeichnet, daß** das Stellelement (41) mit einer Gassacksteuerung (45) gekoppelt ist und bei deaktiviertem Gassack den Blockiermechanismus in Richtung zur ersten Blockierstellung bewegt.

8. Gurtaufroller nach einem der Ansprüche 1 bis 4, **dadurch gekennzeichnet, daß** das Stellelement mit der Gurtspule (5) mechanisch gekoppelt ist und im Rückhaltefall bei Gurtbandabzug unter Last die Gurtspulendrehung eine solche Verstellung des Stellelements herbeiführt, daß es den Blockiermechanismus wenigstens in Richtung zur ersten Blockierstellung bewegt.

9. Gurtaufroller nach Anspruch 8, **dadurch gekennzeichnet, daß** das Stellelement eine Kupplungsscheibe ist, die beim Beschleunigen im Rückhaltefall eine Steuerklinke als zweites Sperrglied wenigstens in Richtung zur ersten Blockierstellung bewegt.

10. Gurtaufroller nach einem der Ansprüche 1 bis 4, **dadurch gekennzeichnet, daß** das Stellelement (121) ein pyrotechnischer Stellantrieb ist.

11. Gurtaufroller nach einem der vorhergehenden Ansprüche, **dadurch gekennzeichnet, daß** jedem Kraftbegrenzer jeweils eine eigene Sperrverzahnung (15, 21) zugeordnet ist und das zweite Sperrglied eine verschiebbare Sperrklinke (19; 119) aufweist, die in der zweiten Blockierstellung in eine Sperrverzahnung (21) eines Kraftbegrenzers einrasten kann.

12. Gurtaufroller nach Anspruch 11, **dadurch gekennzeichnet, daß** wenigstens einem Kraftbegrenzer eine eigene Sperrverzahnung (15) zugeordnet ist, in die eine Sperrklinke (17) im Rückhaltefall unabhängig vom Blockiermechanismus einrastet.

13. Gurtaufroller nach einem der vorhergehenden Ansprüche, **dadurch gekennzeichnet, daß** wenigstens ein Kraftbegrenzer als Bandauszugsvorrichtung (31) ausgebildet ist.

14. Gurtaufroller nach einem der vorhergehenden Ansprüche, **dadurch gekennzeichnet, daß** wenigstens ein Kraftbegrenzer als Torsionsstab (11) ausgebildet ist.

15. Gurtaufroller nach einem der vorhergehenden Ansprüche, **dadurch gekennzeichnet, daß** das zweite Sperrglied durch eine axial verschieblich angeordnete Sperrklinke (19) gebildet ist.

## Claims

1. A belt retractor for a vehicle safety belt (3),
comprising a belt spool (5),
a first (11) and a second force limiter (31) which each put up a defined force against the rotation of the belt spool (5) during unwinding, and
a first locking member (17) which in a case of restraint brings the first force limiter (11) into the flow of force between the first locking member (17) and the belt spool (5),
as well as an adjusting element (39; 41; 121) and a blocking mechanism (19, 35, 119) which is configured as a second locking member (19, 119),
**characterized in that**
after a primary impact in which the first force limiter (11) was actuated, the adjusting element (39; 41; 121) selectively
causes the second locking member (19, 119) to be moved at least towards a first blocking position, in which the first (11) and the second force limiter (31) are deactivated, or
causes a still unused force limiter (31) to be connected additionally.

2. The belt retractor according to claim 1, **characterized in that** the blocking mechanism has a release position in which it does not influence the belt spool rotation.

3. The belt retractor according to either one of the preceding claims, **characterized in that** the position of the blocking mechanism during an accident depends on at least one of the following factors:
weight of the occupant,
height of the occupant,
severity of the accident, or
position of the occupant in the vehicle.

4. The belt retractor according to any of the preceding claims, **characterized in that** several force limiters are provided and all force limiters are deactivated in the first blocking position.

5. The belt retractor according to any of the preceding claims, **characterized in that** the adjusting element is an adjusting screw (39).

6. The belt retractor according to any of claims 1 to 4, **characterized in that** the adjusting element is an electric adjusting element (41).

7. The belt retractor according to claim 6, **characterized in that** the adjusting element (41) is coupled with a gas bag control (45) and, with the gas bag deactivated, moves the blocking mechanism towards the first blocking position.

8. The belt retractor according to any of claims 1 to 4, **characterized in that** the adjusting element is mechanically coupled with the belt spool (5) and, in a case of restraint with a belt webbing withdrawal under load, the belt spool rotation brings about such a shifting of the adjusting element that it moves the blocking mechanism at least towards the first blocking position.

9. The belt retractor according to claim 8, **characterized in that** the adjusting element is a clutch disc which on acceleration in a case of restraint moves a control pawl as a second locking member at least towards the first blocking position.

10. The belt retractor according to any of claims 1 to 4, **characterized in that** the adjusting element (121) is a pyrotechnic adjusting drive.

11. The belt retractor according to any of the preceding claims, **characterized in that** each force limiter has assigned to it its own respective locking toothing (15, 21), and the second locking member has a displaceable locking pawl (19; 119) which in the second blocking position can engage into a locking toothing (21) of a force limiter.

12. The belt retractor according to claim 11, **characterized in that** at least one force limiter has assigned to it its own locking toothing (15), into which in a case of restraint a locking pawl (17) engages independently of the blocking mechanism.

13. The belt retractor according to any of the preceding claims, **characterized in that** at least one force limiter is configured as a band extraction device (31).

14. The belt retractor according to any of the preceding claims, **characterized in that** at least one force limiter is configured as a torsion rod (11).

15. The belt retractor according to any of the preceding claims, **characterized in that** the second locking member is formed by an axially displaceably arranged locking pawl (19).

## Revendications

1. Enrouleur de ceinture pour une ceinture de sécurité (3) de véhicule, comportant une bobine de ceinture (5),
un premier limiteur de force (11) et un deuxième limiteur de force (31) qui opposent chacun une force définie à la rotation de la bobine de ceinture (5) lors du déroulement, et
un premier organe de blocage (17) qui, en cas de retenue, amène le premier limiteur de force (11) dans le flux de force entre le premier organe d'arrêt (17) et la bobine de ceinture (5),
ainsi qu'un élément de réglage (39 ; 41 ; 121) et un mécanisme de blocage (19, 35, 19) qui est réalisé sous forme de deuxième organe d'arrêt (19, 119),
**caractérisé en ce que**
après un impact primaire, dans lequel le premier limiteur de force (11) a été actionné, sélectivement l'élément de réglage (39 ; 41 ; 121)
provoque un déplacement du deuxième organe d'arrêt (19, 119) au moins en direction d'une première position de blocage dans laquelle le premier limiteur de force (11 ) et le deuxième limiteur de force (3 1 ) sont désactivés ou
provoque la mise en circuit d'un autre limiteur de force (31) encore inutilisé.

2. Enrouleur de ceinture selon la revendication 1, **caractérisé en ce que** le mécanisme de blocage a une position de libération dans laquelle il n'influence plus la rotation de la bobine de ceinture.

3. Enrouleur de ceinture selon l'une des revendications précédentes, **caractérisé en ce que** la position du mécanisme de blocage pendant un accident dépend d'au moins un des facteurs suivants :
taille de l'occupant,
gravité de l'accident ou
position de l'occupant dans le véhicule.

4. Enrouleur de ceinture selon l'une des revendications précédentes, **caractérisé en ce qu'**il est prévu plusieurs limiteurs de force et que tous les limiteurs de force sont désactivés dans la première position de blocage.

5. Enrouleur de ceinture selon l'une des revendications précédentes, **caractérisé en ce que** l'élément de réglage est une vis de réglage (39).

6. Enrouleur de ceinture selon l'une des revendications la 4, **caractérisé en ce que** l'élément de réglage est un élément de réglage (41) électrique.

7. Enrouleur de ceinture selon la revendication 6, **caractérisé en ce que** l'élément de réglage (41) est accouplé à une commande de coussin à gaz (45) et déplace le mécanisme de blocage en direction de la première position de blocage lorsque le coussin à gaz est désactivé.

8. Enrouleur de ceinture selon l'une des revendications 1 à 4, **caractérisé en ce que** l'élément de réglage est accouplé mécaniquement à la bobine de ceinture (5) et, en cas de retenue et lorsque le dévidage de la sangle de ceinture est sous charge, la rotation de la bobine de ceinture provoque un tel mouvement de l'élément de réglage que celui-ci déplace le mécanisme de blocage au moins en direction vers la première position de blocage.

9. Enrouleur de ceinture selon la revendication 8, **caractérisé en ce que** l'élément de réglage est un disque d'accouplement qui lors de l'accélération en cas de retenue, déplace un cliquet de commande servant de deuxième organe d'arrêt au moins en direction vers la première position de blocage.

10. Enrouleur de ceinture selon l'une des revendications 1 à 4, **caractérisé en ce que** l'élément de réglage (121) est un mécanisme de commande pyrotechnique.

11. Enrouleur de ceinture selon l'une des revendications précédentes, **caractérisé en ce qu'**à chaque limiteur de force est associée une denture d'arrêt (15, 21) propre et le deuxième organe d'arrêt présente un cliquet d'arrêt (19 ; 119) déplaçable qui, dans la deuxième position de blocage, peut s'enclencher dans une denture d'arrêt (21) d'un limiteur de force.

12. Enrouleur de ceinture selon la revendication 11, **caractérisé en ce qu'**à au moins un limiteur de force est associée une denture d'arrêt (15) propre dans laquelle un cliquet d'arrêt (17) s'enclenche en cas de retenue, indépendamment du mécanisme de blocage.

13. Enrouleur de ceinture selon l'une des revendications précédentes, **caractérisé en ce qu'**au moins un limiteur de force est réalisé sous forme de dévidoir de sangle (31).

14. Enrouleur de ceinture selon l'une des revendications précédentes, **caractérisé en ce qu'**au moins un limiteur de force est réalisé sous forme de barre de torsion (11).

15. Enrouleur de ceinture selon l'une des revendications précédentes, **caractérisé en ce que** le deuxième organe d'arrêt est formé par un cliquet d'arrêt (19) agencé à déplacement axial.
